# EUROPEAN PATENT APPLICATION

(11) **EP 4 848 415 A1**
(43) Date of publication of application: **02.12.2026**
(21) Application number: 24944067.8
(22) Date of filing: 12.07.2024
(51) Int. Cl.: H01M 50/102, H01M 10/04

(54) **BATTERY CASING AND BATTERY CELL**

(30) Priority: 28.06.2024 CN 202421523260 U
(71) Applicant: Eve Energy Co., Ltd., Huizhou, Guangdong 516006 (CN)
(72) Inventor: HAN, Jiaqi, Huizhou, Guangdong 516006 (CN); LI, Xixin, Huizhou, Guangdong 516006 (CN); ZHU, Junming, Huizhou, Guangdong 516006 (CN); LI, Futao, Huizhou, Guangdong 516006 (CN)
(74) Representative: Biallo, Dario
(86) International application number: PCT/CN2024/105287
(87) International publication number: WO 2026/000489

(57) **Abstract**

Provided are a battery housing and a battery cell. The battery housing includes a housing body and a housing cover. The housing body forms an accommodation cavity and an opening communicating with the accommodation cavity. The accommodation cavity is configured to accommodate a bare cell. The housing body is provided with a mounting hole for mounting a terminal. The housing body is an integrally stamped structure. The housing cover is connected to the housing body and covers the opening. The housing body of the present application can be completely formed through a stamping process.

## Description

The present application claims priority to Chinese Patent Application No. 202421523260.2 filed with the China National Intellectual Property Administration (CNIPA) on Jun. 28, 2024, the disclosure of which is incorporated herein by reference in its entirety.

### TECHNICAL FIELD

The present application relates to the field of battery technology and, in particular, to a battery housing and a battery cell.

### BACKGROUND

With the rapid popularization of new energy, new energy batteries are rapidly popularized and applied across various industries.

### TECHNICAL PROBLEM

In the early stage, new energy batteries are only needed to meet the basic requirements of energy storage and discharge. However, new energy batteries are now needed to increase their energy density, that is, to store more electric energy per unit volume.

### TECHNICAL SOLUTION

In a first aspect, the present application provides a battery housing. The battery housing includes a housing body and a housing cover. The housing body forms an accommodation cavity and an opening communicating with the accommodation cavity. The accommodation cavity is configured to accommodate a bare cell. The housing body is provided with a mounting hole for mounting a terminal. The housing body is an integrally stamped structure. The housing cover is connected to the housing body and covers the opening.

In a second aspect, the present application provides a battery cell. The battery cell includes a bare cell and the battery housing provided in the present application. The bare cell is accommodated in an accommodation cavity.

### BENEFICIAL EFFECTS

The battery housing and battery cell provided in the present application have the following beneficial effects: The housing body is provided with the mounting hole for mounting the terminal, that is, the housing body serves as a port through which the electric energy of the battery cell is introduced and extracted; the housing body may be manufactured as an elongated, low-height housing body and may be fully formed through a stamping process; compared with the stretch forming process, the thickness of the material used for the housing body can be significantly reduced so that the stamped housing body does not need to occupy excessive space; moreover, the stamped housing body does not require annealing to eliminate stress, thereby reducing cosmetic damage to the housing body; compared with the bending-and-welding process, the housing body formed by the bending-and-welding process requires a relatively great number of welding operations; for example, in the case of a prismatic housing body, two welding operations are required, resulting in a high probability of weld leakage, cold welds, and weld spatter and thereby affecting the final yield of the housing body; moreover, the precision requirements for a welded position are extremely high, easily leading to uneven heights, inconsistent thicknesses, and consequently uneven stress distribution that may cause the housing body to fracture at the welded position.

### BRIEF DESCRIPTION OF THE DRAWINGS

FIG. 1 is a section view of a battery cell according to the present application.
FIG. 2 is a section view of a housing body according to the present application.
FIG. 3 is a section view of the housing body, a second fixing adhesive, and a terminal according to the present application.
FIG. 4 is a section view of the housing body, the second fixing adhesive, the terminal, and a bare cell according to the present application.
FIG. 5 is a flowchart of a manufacturing method according to the present application.
FIG. 6 is another flowchart of a manufacturing method according to the present application.

### Reference list

- 100: battery cell
- 20: bare cell
- 30: terminal
- 40: second fixing adhesive
- 10: battery housing
- 12: housing body
- 123: accommodation cavity
- 124: opening
- 125: mounting hole
- 121: peripheral side wall
- 122: bottom wall
- 14: housing cover
- 141: covering portion
- 142: lapping portion
- 16: first fixing adhesive

### EMBODIMENTS OF THE PRESENT INVENTION

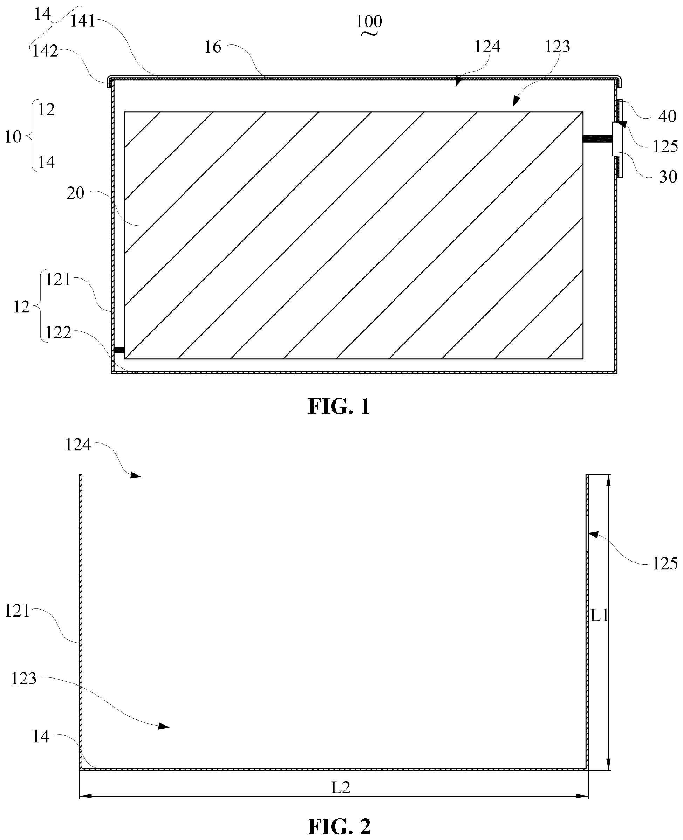

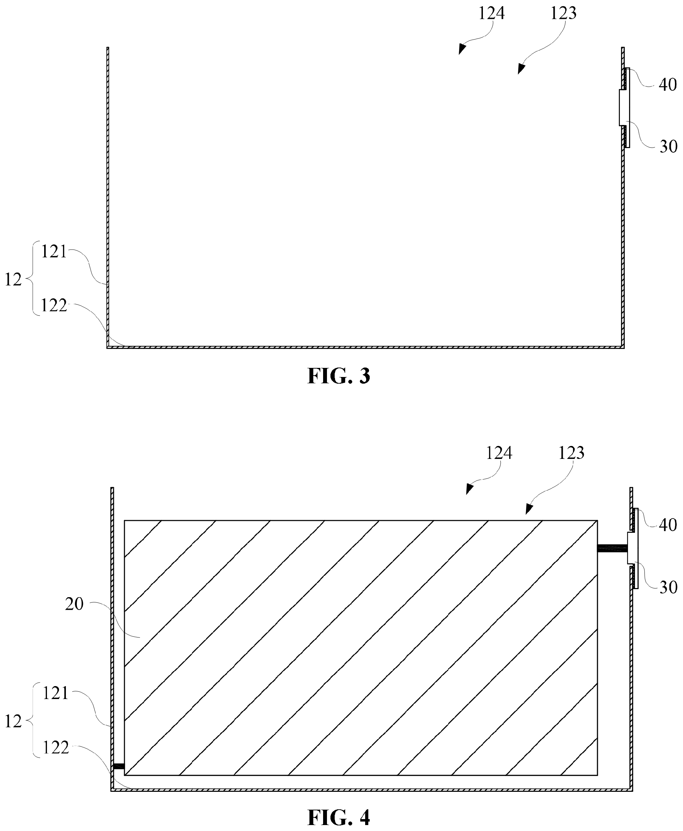

Referring to FIGS. 1 to 4, FIG. 1 is a section view of a battery cell 100 according to the present application. FIG. 2 is a section view of a housing body 12 according to the present application. FIG. 3 is a section view of the housing body 12, a second fixing adhesive 40, and a terminal 30 according to the present application. FIG. 4 is a section view of the housing body 12, the second fixing adhesive 40, the terminal 30, and a bare cell 20 according to the present application.

An embodiment of the present application provides a battery cell 100. The battery cell 100 includes a bare cell 20 and a battery housing 10. The bare cell 20 includes an electrode assembly and an insulating film. The insulating film encloses the electrode assembly. The electrode assembly has a positive electrode and a negative electrode. The electrode assembly may include a positive electrode sheet, a separator, and a negative electrode sheet. The positive electrode sheet, the separator, and the negative electrode sheet are sequentially stacked to form the electrode assembly having the positive electrode and the negative electrode. The battery housing 10 has an accommodation cavity 123. The bare cell 20 is accommodated in the accommodation cavity 123.

Specifically, the battery housing 10 includes a housing body 12 and a housing cover 14. The housing body 12 forms the accommodation cavity 123 and an opening 124 communicating with the accommodation cavity 123. The accommodation cavity 123 is configured to accommodate the bare cell 20. The housing body 12 is provided with a mounting hole 125 for mounting a terminal 30. The terminal 30 is connected to the bare cell 20 to be electrically charged. The housing cover 14 is connected to the housing body 12 and covers the opening 124. The housing body 12 is an integrally stamped structure. That is, the housing body 12 is formed into an initial shape in a single operation by a stamping process.

In this embodiment, the housing body 12 is provided with the mounting hole 125 for mounting the terminal 30. That is, the housing body 12 serves as a port through which the electric energy of the battery cell 100 is introduced and extracted. The housing body 12 may be manufactured as an elongated, low-height housing body 12 and may be fully formed through a stamping process. Compared with the stretch molding process, the thickness of the material used for the housing body 12 can be significantly reduced so that the stamped housing body 12 does not need to occupy excessive space. Moreover, the stamped housing body 12 does not require annealing to eliminate stress, thereby reducing cosmetic damage to the housing body 12. Compared with the bending-and-welding process, the housing body 12 formed by the bending-and-welding process requires a relatively great number of welding operations. For example, in the case of a prismatic housing body 12, two welding operations are required, resulting in a high probability of weld leakage, cold welds, and weld spatter and thereby affecting the final yield of the housing body 12. Moreover, the precision requirements for a welded position are extremely high, easily leading to uneven heights, inconsistent thicknesses, and consequently uneven stress distribution that may cause the housing body 12 to fracture at the welded position.

The housing body 12 may be made of stainless steel. According to the definition in GB/T20878-2007, stainless steel is the steel whose main characteristics are stainlessness and corrosion resistance, with a chromium content of at least 10.5% and a carbon content not exceeding 1.2% at most. Stainless steel is an abbreviation for stainless and acid-resistant steel. Steel that is resistant to weak corrosive media such as air, steam, and water or that has stainlessness is referred to as stainless steel. Steel that is resistant to corrosion by chemical corrosive media (such as acids, alkalis, salts, and other chemical etchants) is referred to as acid-resistant steel. The housing body 12 made of stainless steel may withstand stamping forming even when it is relatively thin. The housing body 12 has a thickness of D millimeters, satisfying that 0.2 ≤ D ≤ 1.0. For example, D may be 0.2, 0.5, 0.8, or 1.0.

The battery housing 10 further includes a first fixing adhesive 16. The first fixing adhesive 16 is disposed at the connection position between the housing cover 14 and the housing body 12 to adhesively bond the housing cover 14 to the housing body 12. The first fixing adhesive 16 may be a heat-sealing adhesive. The heat-sealing adhesive is a plastic adhesive whose physical state changes with temperature within a certain temperature range, with its chemical properties unchanged. The heat-sealing adhesive is non-toxic and odorless, making it an environmentally friendly chemical product. The first fixing adhesive 16 may also be an epoxy resin adhesive. The epoxy resin adhesive is an important thermosetting resin adhesive. In particular, due to its excellent physical and mechanical properties, electrical insulation properties, chemical corrosion resistance, heat resistance, and adhesive properties, the epoxy resin adhesive is known as the "universal adhesive" and can be widely used in industrial fields such as chemical engineering, light industry, water conservancy, transportation, machinery, electronics, home appliances, automotive, and aerospace. The use of the first fixing adhesive 16 in combination with a conventional mold sealing method guarantees sealing performance, reduces production difficulty, and increases the final product yield while ensuring sealing integrity.

Of course, the housing cover 14 and the housing body 12 may also be connected together by welding. However, compared with the adhesive bonding method, the first fixing adhesive 16 may be melted at a relatively low temperature and cooled to fix the housing cover 14 and the housing body 12. Moreover, the first fixing adhesive 16 has strong sealing performance and may completely seal the gap between the housing cover 14 and the housing body 12.

The housing cover 14 includes a covering portion 141 and a lapping portion 142. The lapping portion 142 is connected to the covering portion 141 and bent to extend toward the housing body 12. In this case, the section of the housing cover 14 forms a U-like structure. The covering portion 141 covers the opening 124. The lapping portion 142 is connected to a peripheral side wall 121 of the housing body 12. The lapping portion 142 and the housing body 12 are in surface-to-surface contact so that the contact area between the housing cover 14 and the housing body 12 is increased. In this embodiment, the housing cover 14 is bent so that the housing cover 14 and the housing body 12 are in surface-to-surface contact, thereby increasing the contact area between the housing cover 14 and the housing body 12. In this case, the process tolerance can be improved whether the housing cover 14 and the housing body 12 are connected by adhesive bonding or welding, ensuring the stability and sealing performance of the connection between the housing cover 14 and the housing body 12.

In an embodiment, the lapping portion 142 abuts against the outer surface of the peripheral side wall 121. In this case, the junction between the housing cover 14 and the housing body 12 faces downward. The covering portion 141 is connected to an edge of the housing body 12 that forms the opening 124. The top surface of the opening 124 provides support for the housing cover 14. Such a connection manner ensures that the housing cover 14 covers the opening 124 of the housing body 12, preventing water ingress caused by the junction between the housing cover 14 and the housing body 12 facing upward. Moreover, the housing body 12 can also provide support and positioning functions for the housing cover 14, facilitating the subsequent connection of the housing cover 14 and the housing body 12.

The housing body 12 includes the peripheral side wall 121 and a bottom wall 122. The peripheral side wall 121 forms the opening 124. The bottom wall 122 is connected to an end of the peripheral side wall 121 facing away from the opening 124. The bottom wall 122 and the peripheral side wall 121 form the accommodation cavity 123. The height L1 of the peripheral side wall 121 is less than the length L2 of the bottom wall 122 to facilitate the stamping and forming of the housing body 12. In this case, the battery housing 10 formed by the housing body 12 and the housing cover 14 is elongated in shape. The peripheral side wall 121 is provided with the mounting hole 125. The terminal 30 of the battery cell 100 is also arranged in the length direction of the bottom wall 122. The mounting hole 125 may be disposed on the peripheral side wall 121 in the length direction of the bottom wall 122 so that the terminal 30 can be mounted in the length direction of the housing body 12, preventing the housing body 12 from being made relatively thick. Of course, the mounting hole 125 may also be disposed on the peripheral side wall 121 in the width direction of the bottom wall 122.

Specifically, L1 denotes the height of the peripheral side wall 121, L2 denotes the length of the bottom wall 122, and 2L1 ≤ L2 ≤ 5L1. That is, the length of the bottom wall 122 is between two times and five times the height of the peripheral side wall 121. Within this range, the housing body 12 exhibits the highest stability and is not prone to deformation due to the thin wall of the housing body 12.

The battery cell 100 further includes the terminal 30 and a second fixing adhesive 40. The terminal 30 is inserted through the mounting hole 125 and electrically connected to one electrode of the bare cell 20, which may be either the positive electrode of the bare cell 20 or the negative electrode of the bare cell 20. The other electrode of the bare cell 20, which may be the other electrode among the positive electrode of the bare cell 20 and the negative electrode of the bare cell 20, is electrically connected to the housing body 12. The housing body 12 is electrically charged. The second fixing adhesive 40 is disposed at the connection position between the terminal 30 and the housing body 12 to adhesively bond the terminal 30 to the housing body 12. The second fixing adhesive 40 may be a heat-sealing adhesive. The second fixing adhesive 40 may also be an epoxy resin adhesive. The second fixing adhesive 40 is used for fixing the terminal 30 to the housing body 12 and insulating the terminal 30 from the housing body 12.

In another embodiment, two terminals 30 are provided. The housing body 12 is provided with two mounting holes 125. The two mounting holes 125 are located on the peripheral side wall 121 in the length direction of the bottom wall 122. The two terminals 30 are assembled in the mounting holes 125 respectively. The positive electrode of the bare cell 20 and the negative electrode of the bare cell 20 are electrically connected to the two terminals respectively.

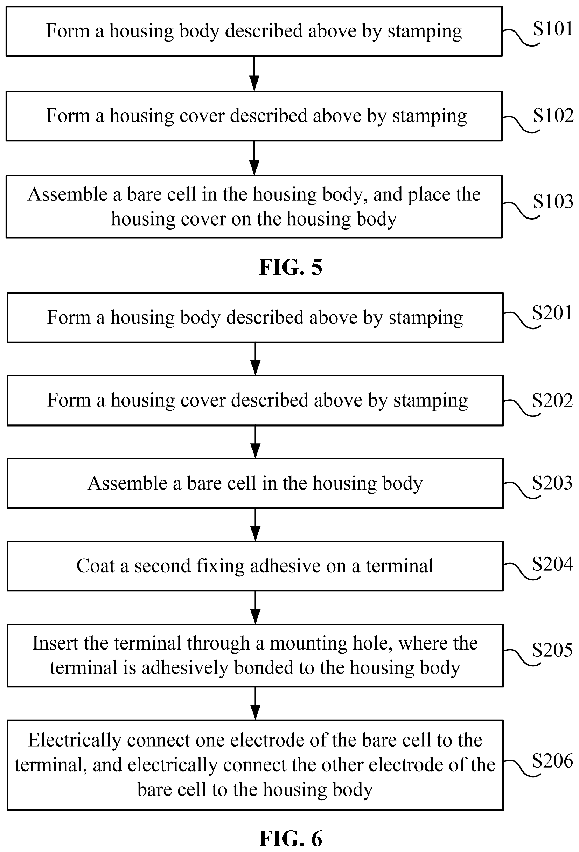

Referring to FIGS. 2 to 5, FIG. 5 is a flowchart of a manufacturing method according to an embodiment of the present application.

In S101, a housing body 12 provided in an embodiment of the present application is formed by stamping.

The sheet material for manufacturing the housing body 12 is placed on a stamping press, and the housing body 12 is formed at one time by cold stamping. The sheet material may be aluminum or steel. Stamping refers to a processing and forming method in which external force is applied to a sheet, a strip, a tube, a profile, and other materials by means of a press and a die so that the material undergoes plastic deformation or separation, thereby obtaining a workpiece (stamped component) of a desired shape and dimension. Blank materials for stamping are mainly hot-rolled and cold-rolled steel sheets and strips. Globally, 60% to 70% of steel materials are sheet materials, most of which are made into finished products by stamping. Bodies, chassis, fuel tanks and radiator fins of automobiles, boiler drums, container housings, and silicon steel sheets of iron cores for motors and electrical appliances are all processed by stamping. A large number of stamped components are also found in products such as instruments and meters, household appliances, bicycles, office machinery, and household utensils.

The housing body 12 forms an accommodation cavity 123 and an opening 124 communicating with the accommodation cavity 123. The accommodation cavity 123 is configured to accommodate a bare cell 20. The housing body 12 is punched to form a mounting hole 125. The mounting hole 125 communicates with the accommodation cavity 123. The mounting hole 125 is used for the assembly of a terminal 30. The terminal 30 is connected to the bare cell 20 to be electrically charged.

The housing body 12 includes a peripheral side wall 121 and a bottom wall 122. The peripheral side wall 121 forms the opening 124. The bottom wall 122 is connected to an end of the peripheral side wall 121 facing away from the opening 124. The bottom wall 122 and the peripheral side wall 121 form the accommodation cavity 123. The height L1 of the peripheral side wall 121 is less than the length L2 of the bottom wall 122 to facilitate the stamping and forming of the housing body 12. In this case, a battery housing 10 formed by the housing body 12 and a housing cover 14 is elongated in shape. The peripheral side wall 121 is provided with the mounting hole 125 in the length direction of the bottom wall 122. The terminal 30 of the battery cell 100 is also arranged in the length direction of the bottom wall 122.

Specifically, L1 denotes the height of the peripheral side wall 121, L2 denotes the length of the bottom wall 122, and 2L1 ≤ L2 ≤ 5L1. That is, the length of the bottom wall 122 is between two times and five times the height of the peripheral side wall 121. Within this range, the housing body 12 exhibits the highest stability and is not prone to deformation due to the thin wall of the housing body 12.

In S102, the housing cover 14 provided in an embodiment of the present application is formed by stamping.

The sheet material for manufacturing the housing cover 14 is placed on a stamping press, and the housing cover 14 is formed at one time by cold stamping. The sheet material may be aluminum or steel. The housing cover 14 includes a covering portion 141 and a lapping portion 142. The lapping portion 142 is connected to the covering portion 141 and bent to extend toward the housing body 12. In this case, the section of the housing cover 14 forms a U-like structure.

Specifically, the covering portion 141 covers the opening 124. The lapping portion 142 is connected to a peripheral side wall 121 of the housing body 12. The lapping portion 142 and the housing body 12 are in surface-to-surface contact so that the contact area between the housing cover 14 and the housing body 12 is increased. In this embodiment, the housing cover 14 is bent so that the housing cover 14 and the housing body 12 are in surface-to-surface contact, thereby increasing the contact area between the housing cover 14 and the housing body 12. In this case, the process tolerance can be improved whether the housing cover 14 and the housing body 12 are connected by adhesive bonding or welding, ensuring the stability and sealing performance of the connection between the housing cover 14 and the housing body 12.

In an embodiment, the lapping portion 142 abuts against the outer surface of the peripheral side wall 121. In this case, the junction between the housing cover 14 and the housing body 12 faces downward. The covering portion 141 is connected to the top surface of the opening 124. The top surface of the opening 124 provides support for the housing cover 14. Such a connection manner guarantees that the housing cover 14 covers the opening 124 of the housing body 12, preventing water ingress caused by the junction between the housing cover 14 and the housing body 12 facing upward. Moreover, the housing body 12 can also provide support and positioning functions for the housing cover 14, facilitating the subsequent connection of the housing cover 14 and the housing body 12.

In S103, the bare cell 20 is assembled in the housing body 12, and the housing cover 14 is placed on the housing body 12.

After the bare cell 20 is placed into the housing body 12, the housing cover 14 is placed on the housing body 12. The housing cover 14 is connected to the housing body 12 and covers the opening 124. The battery housing 10 further includes a first fixing adhesive 16. The first fixing adhesive 16 is disposed at the connection position between the housing cover 14 and the housing body 12 to adhesively bond the housing cover 14 to the housing body 12.

Referring to FIGS. 2 to 4 and FIG. 6, FIG. 6 is another flowchart of a manufacturing method according to an embodiment of the present application.

In S201, a housing body 12 provided in an embodiment of the present application is formed by stamping.

In S202, a housing cover 14 provided in an embodiment of the present application is formed by stamping.

In S203, a bare cell 20 is assembled in the housing body 12.

In S204, a second fixing adhesive 40 is coated on a terminal 30.

In S205, the terminal 30 is inserted through a mounting hole 125. The terminal 30 is adhesively bonded to the housing body 12.

In S206, one electrode of the bare cell 20 is electrically connected to the terminal 30, and the other electrode of the bare cell 20 is electrically connected to the housing body 12.

The difference between this embodiment and the previous embodiment is that step S103 is subdivided into steps S203, S204, S205, and S206. The battery cell 100 further includes the terminal 30 and the second fixing adhesive 40. The terminal 30 is inserted through the mounting hole 125 and electrically connected to one electrode of the bare cell 20, which may be either the positive electrode of the bare cell 20 or the negative electrode of the bare cell 20. The other electrode of the bare cell 20, which may be the other electrode among the positive electrode of the bare cell 20 and the negative electrode of the bare cell 20, is electrically connected to the housing body 12. The housing body 12 is electrically charged. The second fixing adhesive 40 is disposed at the connection position between the terminal 30 and the housing body 12 to adhesively bond the terminal 30 to the housing body 12. The second fixing adhesive 40 may be a heat-sealing adhesive. The second fixing adhesive 40 may also be an epoxy resin adhesive. The second fixing adhesive 40 is used for fixing the terminal 30 to the housing body 12 and insulating the terminal 30 from the housing body 12.

In another embodiment, two terminals 30 are provided. The housing body 12 is provided with two mounting holes 125. The two mounting holes 125 are located on the peripheral side wall 121 in the length direction of the bottom wall 122. The two terminals 30 are assembled in the mounting holes 125 respectively. The positive electrode of the bare cell 20 and the negative electrode of the bare cell 20 are electrically connected to the two terminals respectively.

## Claims

1. A battery housing, comprising:
a housing body, forming an accommodation cavity and an opening communicating with the accommodation cavity, wherein the accommodation cavity is configured to accommodate a bare cell, the housing body is provided with a mounting hole for mounting a terminal, and the housing body is an integrally stamped structure; and
a housing cover connected to the housing body and covering the opening.

2. The battery housing according to claim 1, further comprising a first fixing adhesive, wherein the first fixing adhesive is disposed at a connection position between the housing cover and the housing body to adhesively bond the housing cover to the housing body.

3. The battery housing according to claim 1, wherein the housing cover comprises a covering portion and a lapping portion, the lapping portion is connected to the covering portion and bent to extend toward the housing body, the covering portion covers the opening, and the lapping portion is connected to a peripheral side wall of the housing body.

4. The battery housing according to claim 3, wherein the lapping portion abuts against an outer surface of the peripheral side wall, and the covering portion is connected to an edge of the housing body that forms the opening.

5. The battery housing according to any one of claims 1 to 4, wherein the housing body comprises a peripheral side wall and a bottom wall, the peripheral side wall forms the opening, the bottom wall is connected to an end of the peripheral side wall facing away from the opening, the bottom wall and the peripheral side wall form the accommodation cavity, a height of the peripheral side wall is less than a length of the bottom wall, and the peripheral side wall is provided with the mounting hole.

6. The battery housing according to claim 5, wherein L1 denotes the height of the peripheral side wall, L2 denotes the length of the bottom wall, and 2L1 ≤ L2 ≤ 5L1.

7. The battery housing according to claim 5, wherein the peripheral side wall is provided with the mounting hole in a length direction of the bottom wall.

8. The battery housing according to claim 1, wherein the battery housing satisfies any one or a combination of two of the following: the housing body is made of stainless steel, or the housing cover is made of stainless steel.

9. A battery cell, comprising a bare cell and the battery housing according to any one of claims 1 to 8, wherein the bare cell is accommodated in the accommodation cavity.

10. The battery cell according to claim 9, further comprising a terminal and a second fixing adhesive, wherein the terminal is inserted through the mounting hole and electrically connected to an electrode of the bare cell, another electrode of the bare cell is electrically connected to the housing body, and the second fixing adhesive is disposed at a connection position between the terminal and the housing body to adhesively bond the terminal to the housing body.
